# EUROPEAN PATENT APPLICATION

(11) **EP 1 724 577 A1**
(43) Date of publication of application: **22.11.2006**
(21) Application number: 05719444.1
(22) Date of filing: 23.02.2005
(51) Int. Cl.: G01N 31/22

(54) **FLOW ANALYSIS SYSTEM CAPABLE OF MEASURING ELEMENT IN SAMPLE QUANTITATIVELY OR SEMI-QUANTITATIVELY**

(30) Priority: 25.02.2004 JP 2004050211
(71) Applicant: FIAMO Corporation, Tokyo 150-0002 (JP)
(72) Inventor: SAITO, Tadashi, c/o Adtec Co., Ltd., Tokyo 1010047 (JP); SUZUKI, Masayuki, c/o Okayama Techno Center, Kurashiki-shi, Okayama 712-8052 (JP); HAJI, Sayoko, c/o Okayama Techno Center, Kurashiki-shi, Okayama 712-8052 (JP)
(74) Representative: HOFFMANN EITLE
(86) International application number: PCT/JP2005/002936
(87) International publication number: WO 2005/080963

(57) **Abstract**

A flow analysis system or flow injection analysis system, providing a high detection sensitivity even when metallic elements contained in a sample are of extreme trace in amount, wherein a sealed vessel in which a reagent solution is encapsulated is composed of a material having an oxygen permeability of 10 fmol/m².s.Pa (2 cc/m².d.atm) or less.

## Description

### TECHNICAL FIELD

The present invention relates to a technique of analyzing elements of interest by means of flow analysis (FA) or flow injection analysis (FIA).

### BACKGROUND ART

In recent years, importance of quick analyses at the site of sampling (on-site analysis) has been recognized. In the field of environment, for example, various problems at global scales have become serious, such as global warming, ozone layer depletion, acid rains, aerial pollution and marine pollution that are eliciting themselves. In order to solve such problems, it is necessary to have a picture of precise realities, such as forms, conditions or quantities of existence of causative agents responsible for such environmental problems, for which it is essential that reliable on-site techniques be developed for analyzing trace elements.

Also, in a semiconductor manufacturing process, a variety of chemical solutions are used for the processes of washing Si wafers and others, of exposure and development and of etching. When such chemical solutions are contaminated with metallic impurities, product performance and yields may seriously and adversely be affected. In a semiconductor manufacturing process, chemicals of extreme purities are generally used and, for the quality control of such chemicals, solutions of on-site analytical techniques for trace elements are indispensable.

Conventionally, no techniques for analyzing trace metallic elements on-site have existed. In a semiconductor manufacturing process, samples were collected for each chemical solution and processing for increasing detection sensitivity was made in a remotely located laboratory, etc. according to a method applicable only to batch processes, such as enrichment, for which a highly sensitive analytical method such as inductively coupled plasma-mass spectrometry (ICP-MS) was relied upon. For such a method, however, processing such as enrichment of samples was needed and, for that, at least one day was required to provide an analytical result. Consequently, if a chemical solution was determined highly contaminated with impurities, all products relating to that solution were wastefully disposed of, resulting in a decrease of yield. In addition, ICP-MS is expensive in terms of equipment and, furthermore, may not be brought to a site where an on-site analysis is needed due to pollution problems from the exhaust gases when samples, argon and air are heated at high temperatures at or above about 5,000°C.

In addition, as a technique for improving the lower limit of detection, so called sensitization, a method has generally been known in which elements to be detected in sample solutions are enriched to derive the element concentration of the sample, taking the enrichment ratio into account. As methods for enrichment, those of performing evaporation and distillation in a vessel which is less contaminated with impurities, such as one made of platinum and synthetic quartz as well as those of adsorbing elemental constituents onto adsorbents or collectors, such as ion exchange resins, for enrichment are in general practice. These methods are, however, based on batch processing and, therefore, are not easily applicable to on-site analyses.
Even if they are applicable to on-site analyses, they are still not applicable to analyses of the ppt order because contamination from ion exchange resins, concentrators, collectors or even eluents cannot be eliminated.

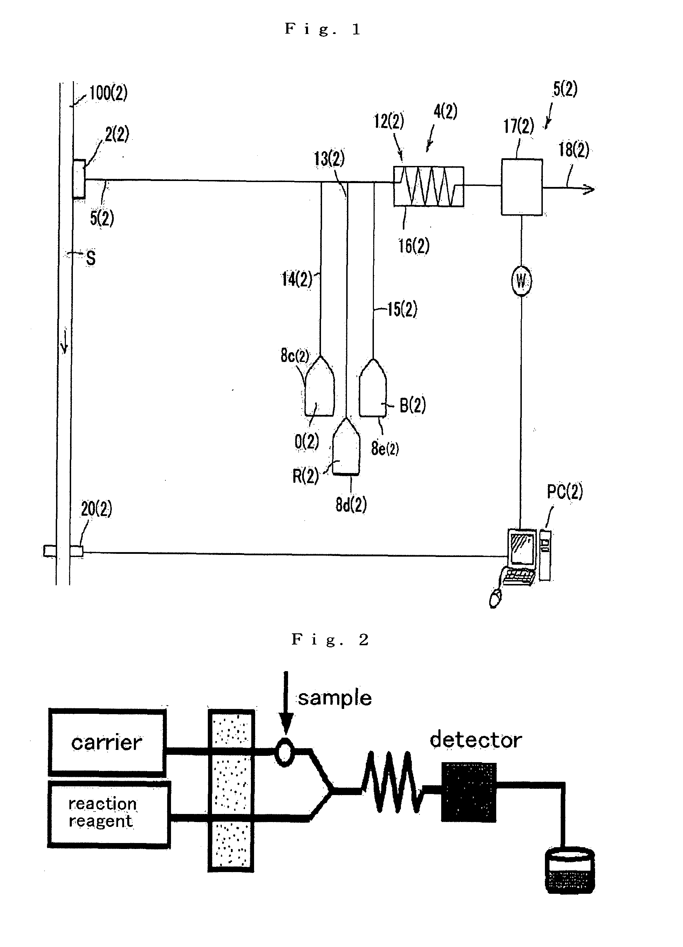

Flow analysis (FA) is known as an analytical technique suitable for on-site analyses. The flow analysis is a technique in which, for example, a sample is flowed through a channel, to which a chemical solution is injected continually or at a suitable interval, and responses from the reaction solution are detected to quantitatively determine the concentrations of analytes in the sample. Explained with reference to Fig. 1, a sample solution S introduced through a sample solution inlet 2 (2) is continually pumped into a channel by means of a pump not shown. With the sample solution S contained in the channel, pumps (not shown) are synchronously actuated for a limited duration to inject color developer solution R (2) and developing aid solution [oxidizer solution O (2) and buffer solution B (2)] into the channel at the same time. Thus, only a portion along the channel contains the sample in admixture with the chemical solutions so that the admixture will undergo a color developing reaction. The admixture will then reach a downstream determination site 17 (2) where absorbance will be determined. On the other hand, portion of the sample that is not in admixture, that is, the sample solution alone, is also determined for absorbance so that the concentrations of analytes may be determined on the basis of the difference Δ.

Moreover, the inventors have proposed an on-site microanalysis with the application of flow injection analysis (FIA) as disclosed in Japanese Unexamined Patent Publication (Kokai) No. 2004-163191 (Japanese Patent Application No. 2002-327720). FIA is a method for analyzing elemental concentrations wherein a carrier (sample carrying fluid) is flowed through a channel, replacing the carrier on a timely basis with a sample to be analyzed, so that the sample will react with a reaction reagent with which elements to be detected will develop colors and the difference in absorbance between the carrier and the sample to be analyzed, Δ, is detected to analyze the elemental concentrations. In FIA, a carrier and a reaction reagent are mixed and thoroughly stirred by means of agitation or dispersion before detecting concentrations using a detector for detecting elemental concentrations (typically, determining absorbance by absorbance analyses) and, as such, the carrier is replaced with a sample at a point of time, thereby determining the differential in absorbance to determine the sample concentrations. Japanese Unexamined Patent Publication No. 2004-163191 (Japanese Patent Application No. 2002-327720) is in its entirety to be incorporated herein.

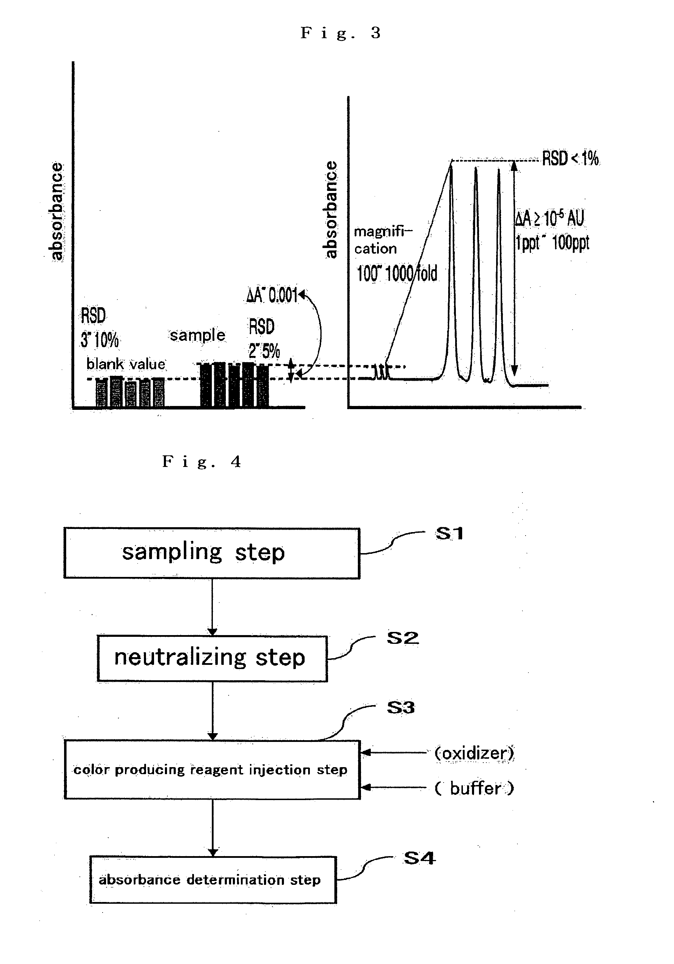

The principle of FIA will now be seen in Figs. 2 and 3. With reference to Fig. 2, a carrier and a reaction reagent are constantly mixed and agitated to detect elements to be determined at a detector. In so doing, a selector valve is provided along the carrier to replace the carrier on a timely basis with a sample to be detected.

Fig. 3 is a chart of absorbance detected with the above conditions. The absorptiometry for the carrier is represented as a blank value. In contrast, the sample to be detected (the sample) is represented by Δ from the blank value so that a differential may be observed between the absorbance characteristics. Specifically, the differential Δ is the difference in absorbance due to the differential between the concentrations of the elements to be detected, contained in the carrier (presumably, 0) and the concentrations of the elements to be detected, contained in the sample. Typically, the Δ is so small that a technique for improving the analytical precision is adopted by magnifying the Δ by 100 to 1,000 times. Also, fluorescence may be determined in stead of absorbance, for which a fluorescent reagent is used instead of a color producing reagent.

Also in FIA, a differential in absorbance between a carrier and a sample may be amplified by means of an electrical technique, thereby to increase the analytical sensitivity. To this end, reaction systems or instruments having small noises for providing a stable background must be implemented.

### DISCLOSURE OF THE INVENTION

### PROBLEMS TO BE SOLVED BY THE INVENTION

By the use of a solution bag, FA and FIA may be converted into a completely closed determination system to shut off any contamination from the environment of determination. In addition, FA and FIA can provide instantaneous results after instrumentation and, moreover, can easily be carried and simply adjusted, which makes them applicable for on-site analyses. As such, they have the advantage that they can be installed in a process of manufacturing semiconductors and the results may immediately be reflected in such a process. In opposition to the advantages as described above, however, conventional FA or FIA instruments or methods of instrumentation have analytical sensitivities of at most the ppb order and, therefore, suffer from difficulties in sensitivity for the application to a semiconductor manufacturing process where impurity control of sub-ppb order to ppt order is required.

Therefore, the present invention aims to provide a metallic element analytical method capable of being implemented on-site, for example, which is extremely sensitive even at trace amounts.

Japanese Unexamined Patent Publication No. 1986-108964 discloses a method of quantitatively determining trace calcium in an aqueous solution and, in particular, a technique of applying a masking reagent to a sample solution for masking calcium as an element to be detected. Disclosed as masking reagents to be used for that are typical chelating agents used as titration reagents for chelating titrations, such as ethylenediamine tetraacetate, ethylene glycol bis(2-aminoethyl)etherdiamine tetraacetate, diethylenetriamine pentaacetate, triethylenetetramine hexaacetate and other salts. It is described therein that, according to this invention, since a comparison is made between a blank agent of a sample solution to which the masking agent is added and the sample solution, the both solutions have the common background and errors resulting from liquidity of the sample solution may be compensated for.

This invention is, however, not directed to providing an ultrahigh purity analysis of the ppt order, because no disclosures are made of application of the technique to FA and FIA. Also, as subsequently described, the present invention uses a development inhibitor (corresponding to masking agent) which is added to a carrier solution instead of to a sample and, therefore, does not utilize the principle of the common background for the both solutions.

In addition, Japanese Unexamined Patent Publication No. 1991-235019 discloses an example of using an anionic exchange resin for the refiner column for the carrier solution for a sample solution and a chelating resin for the refiner column for the carrier solution for a reagent solution, in order to lower concentrations of impurities contained in the carrier solution for the purpose of increasing analytical sensitivity. In this reference, concentrating columns are used in conjunction.

With such a method, impurities will elute from a column filler or an eluent which is used after concentration and, for an analysis of the ppt order, the concentrations of such eluted impurities may sometimes exceed the concentrations of impurities contained in a sample to be detected, preventing this method from being applied to an ultrahigh purity analysis.
Patent Reference 1: Japanese Unexamined Patent Publication No. 1986-108964
Patent Reference 2: Japanese Unexamined Patent Publication No. 1991-235019

### MEANS OF SOLVING THE PROBLEMS

For the problems to be solved by the present invention, the following basic approach was adopted in the present invention.

In an ultrahigh purity analysis, it is preferably premised on a reaction in which elements to be detected act as catalysts for color developing reactions to help color development without being consumed per se (catalytic reactions) instead of one in which the elements to be detected are consumed to develop colors. Based upon such premise, sensitive analyses are enabled by determining the degree of color development under certain conditions, such as temperature, time, pH and others, using determination conditions in which the reaction between a reference material (herein, carrier) and a sample material is controlled and the S/N ratio between them is optimized. In order to realize the certain conditions, it is preferable that a continuous analytical method be adopted in which various conditions may be standardized for each analysis, instead of a batch analytical method in which the degree of contamination of vessels used for the analyses will differ for each time. According the present invention, it is preferable to apply catalytic reaction reagents to FA and FIA that are on-site analytical methods.

In order to implement a microanalysis, it is important to prevent contamination from the environment of determination. When an element to be detected is a typical metal, such as iron, it may be airborne or may intrude from experimentation equipment, vessels and piping. As such, the determination system according to the present invention is preferably a system closed off to a maximum extent from the external environment.

Furthermore, in order to improve the S/N ratio, it is preferable to reduce the color development of the elements to be detected (impurities) contained in the reference material (carrier).

These ideas, in any combination, will improve the analytical sensitivity so that ultrahigh purity elemental analyses of the ppt order may be enabled.

More specifically, the present inventions (1) to (14) are based on the constituent features as follows.

The present invention (1) is a flow analysis system or flow injection analysis system, capable of quantitatively or semi-quantitatively determining elements to be detected, contained in a sample solution, to which a sealed vessel is connected in which a reagent solution is encapsulated, said reagent solution generating a detectable response according to the concentrations of the elements to be detected, contained in the sample solution, wherein the sealed vessel in which a reagent solution is encapsulated is composed of a material having an oxygen permeability of 10 fmol/m².s.Pa (2 cc/m².d.atm) or less.

One aspect of the present invention (1) is a flow analysis system or flow injection analysis system, comprising a sample solution inlet for introducing a sample solution into a channel; a reagent solution inlet for introducing a reagent solution into a channel, to which a sealed vessel, in which the reagent solution is encapsulated, is connected, said reagent solution generating a detectable response according to the concentrations of elements to be detected, contained in the sample solution; and a response determination section for determining the response, located downstream the sample solution inlet and the reagent solution inlet, said system capable of quantitatively or semi-quantitatively determining the elements to be detected, contained in the sample solution, on the basis of the difference Δ between a first response with respect to a first solution flowing through the channel (for example, a mixed solution of the sample solution and the reagent solution) and a second response as a baseline value with respect to a second solution flowing through the channel (a solution other than the mixed solution, for example) wherein the sealed vessel in which the reagent solution is encapsulated is composed of a material having an oxygen permeability of 10 fmol/m².s.Pa (2 cc/m².d.atm) or less.

The present invention (2) is the flow analysis system or flow injection analysis system according to the invention (1) to which further connected is a sealed vessel in which an auxiliary solution, other than the reagent solution, necessary for the response determination is encapsulated, wherein the sealed vessel in which the auxiliary solution is encapsulated is composed of a material having an oxygen permeability of 10 fmol/m².s.Pa (2 cc/m².d.atm) or less.

One aspect of the present invention (2) is the flow analysis system or flow injection analysis system according to the invention (1) further comprising an auxiliary solution inlet for introducing the auxiliary solution into the channel, to which the sealed vessel, in which the auxiliary solution, other than the reagent solution, necessary for the response determination is encapsulated, is connected, wherein the sealed vessel in which the auxiliary solution is encapsulated is composed of a material having an oxygen permeability of 10 fmol/m².s.Pa (2 cc/m².d.atm) or less.

The present invention (3) is the flow analysis system or flow injection analysis system according to the invention (2) wherein the auxiliary solution is at least one selected from a carrier solution, a neutralizing solution, an oxidizer solution, a buffer solution, a standard solution of the element to be detected and a blank solution.

The present invention (4) is the flow analysis system or flow injection analysis system according to any one of the inventions (1) to (3) wherein the oxygen content in the reagent solution or the auxiliary solution as encapsulated in the sealed vessel is 5 ppm or less.

The present invention (5) is a sealed vessel to be used in the flow analysis system or flow injection analysis system according to any one of the inventions (1) to (4) which is composed of a material having an oxygen permeability of 10 fmol/m².s.Pa (2 cc/m².d.atm) or less, and in which the reagent solution or the auxiliary solution is encapsulated.

The present invention (6) is the sealed vessel according to the invention (5) wherein the oxygen content in the reagent solution or the auxiliary solution as encapsulated in the sealed vessel is 5 ppm or less.

The present invention (7) is a flow analysis system or flow injection analysis system, capable of quantitatively or semi-quantitatively determining elements to be detected, contained in a sample solution, to which a sealed vessel is connected in which a reagent solution is encapsulated, said reagent solution generating a detectable response according to the concentrations of the elements to be detected, contained in the sample solution, wherein the oxygen content in the reagent solution as encapsulated in the sealed vessel is 5 ppm or less.

One aspect of the present invention (7) is a flow analysis system or flow injection analysis system, comprising a sample solution inlet for introducing a sample solution into a channel; a reagent solution inlet for introducing a reagent solution into a channel, to which a sealed vessel, in which the reagent solution is encapsulated, is connected, said reagent solution generating a detectable response according to the concentrations of elements to be detected, contained in the sample solution; and a response determination section for determining the response, located downstream the sample solution inlet and the reagent solution inlet, said system capable of quantitatively or semi-quantitatively determining the elements to be detected, contained in the sample solution, on the basis of the difference Δ between a first response with respect to a first solution flowing through the channel (for example, a mixed solution of the sample solution and the reagent solution) and a second response as a baseline value with respect to a second solution flowing through the channel (a solution other than the mixed solution, for example) wherein the oxygen content in the reagent solution as encapsulated in the sealed vessel is 5 ppm or less.

The present invention (8) is the flow analysis system or flow injection analysis system according to the invention (7) further comprising an auxiliary solution inlet for introducing the auxiliary solution into the channel, to which a sealed vessel, in which the auxiliary solution, other than the reagent solution, necessary for the response determination is encapsulated, is connected, wherein the oxygen content in the reagent solution as encapsulated in the sealed vessel is 5 ppm or less.

The present invention (9) is the flow analysis system or flow injection analysis system according to the invention (8) wherein the auxiliary solution is at least one selected from a carrier solution, a neutralizing solution, an oxidizer solution, a buffer solution, a standard solution of the element to be detected and a blank solution.

The present invention (10) is the flow analysis system or flow injection analysis system according to any one of the inventions (7) to (9) wherein the sealed vessel in which the reagent solution or the auxiliary solution is encapsulated is composed of a material having an oxygen permeability of 10 fmol/m².s.Pa (2 cc/m².d.atm) or less.

The present invention (11) is a sealed vessel to be used in the flow analysis system or flow injection analysis system according to any one of the inventions (7) to (10) in which the reagent solution or the auxiliary solution having an oxygen content of 5 ppm or less is encapsulated.

The present invention (12) is the sealed vessel according to the invention (11) which is composed of a material having an oxygen permeability of 10 fmol/m².s.Pa (2 cc/m².d.atm) or less.

The present invention (13) is a flow analysis system or flow injection analysis system, capable of quantitatively or semi-quantitatively determining elements to be detected, contained in a sample solution, on the basis of the difference Δ between a first response with respect to a first solution flowing through a channel and a second response as a baseline value with respect to a second solution flowing through the channel, wherein the second solution flowing through the channel contains a response suppressing substance which acts to suppress the response by the reagent solution.

One aspect of the present invention (13) is a flow analysis system or flow injection analysis system, comprising a sample solution inlet for introducing a sample solution into a channel; a reagent solution inlet for introducing a reagent solution into a channel, to which a sealed vessel, in which the reagent solution is encapsulated, is connected, said reagent solution generating a detectable response according to the concentrations of elements to be detected, contained in the sample solution; and a response determination section for determining the response, located downstream the sample solution inlet and the reagent solution inlet, said system capable of quantitatively or semi-quantitatively determining the elements to be detected, contained in the sample solution, on the basis of the difference Δ between a first response with respect to a first solution flowing through the channel (for example, a mixed solution of the sample solution and the reagent solution) and a second response as a baseline value with respect to a second solution flowing through the channel (for example, a solution other than the mixed solution) wherein the second solution flowing through the channel contains a response suppressing substance which acts to suppress the response by the reagent solution.

The present invention (14) is a method for flow analysis or flow injection analysis, comprising the steps of introducing a sample solution into a channel; introducing a reagent solution into the channel, to which a sealed vessel, in which the reagent solution is encapsulated, is connected, said reagent solution generating a detectable response according to the concentrations of elements to be detected, contained in the sample solution; and detecting a first response with respect to a first solution flowing through the channel (for example, a mixed solution of the sample solution and the reagent solution) and detecting or inputting a second response as a baseline value with respect to a second solution flowing through the channel (for example, a solution other than the mixed solution) said method capable of quantitatively or semi-quantitatively determining the elements to be detected, contained in the sample solution, on the basis of the difference Δ between the first response and the second response, wherein the sealed vessel in which the reagent solution is encapsulated is composed of a material having an oxygen permeability of 10 fmol/m².s.Pa (2 cc/m².d.atm) or less.

The second response as a baseline value with respect to the second solution is preferably obtained by detection from the viewpoint of accuracy. Since the value is typically lower than the first response, however, it may be recorded as a prescribed value (for example, the average based on the values determined in the past) and obtained as the prescribed value when input. Similarly, the phrase "detecting or inputting a second response" according to the present invention has the same effect hereinafter.

The present invention (15) is the method for flow analysis or flow injection analysis according to the invention (14) further comprising the step of introducing an auxiliary solution into the channel from a sealed vessel in which the auxiliary solution, other than the reagent solution, necessary for the response determination is encapsulated, wherein the sealed vessel in which the auxiliary solution is encapsulated is composed of a material having an oxygen permeability of 10 fmol/m².s.Pa (2 cc/m².d.atm) or less.

The present invention (16) is the method for flow analysis or flow injection analysis according to the invention (15) wherein the auxiliary solution is at least one selected from a carrier solution, a neutralizing solution, an oxidizer solution, a buffer solution, a standard solution of the element to be detected and a blank solution.

The present invention (17) is the method for flow analysis or flow injection analysis according to any one of the inventions (14) to (16) wherein the oxygen content in the reagent solution or the auxiliary solution as encapsulated in the sealed vessel is 5 ppm or less.

The present invention (18) is a method for flow analysis or flow injection analysis, comprising the steps of introducing a sample solution into a channel; introducing a reagent solution into the channel from a sealed vessel in which the reagent solution is encapsulated, said reagent solution generating a detectable response according to the concentrations of elements to be detected, contained in the sample solution; and detecting a first response with respect to a first solution flowing through the channel (for example, a mixed solution of the sample solution and the reagent solution) and detecting or inputting a second response as a baseline value with respect to a second solution flowing through the channel (for example, a solution other than the mixed solution) said method capable of quantitatively or semi-quantitatively determining the elements to be detected, contained in the sample solution, on the basis of the difference Δ between the first response and the second response, wherein the oxygen content in the reagent solution as encapsulated in the sealed vessel is 5 ppm or less.

The present invention (19) is the method for flow analysis or flow injection analysis according to the invention (18) further comprising the step of introducing an auxiliary solution into the channel, to which a sealed vessel, in which the auxiliary solution, other than the reagent solution, necessary for the response determination is encapsulated, is connected, wherein the oxygen content in the reagent solution as encapsulated in the sealed vessel is 5 ppm or less.

The present invention (20) is the method for flow analysis or flow injection analysis according to the invention (19) wherein the auxiliary solution is at least one selected from a carrier solution, a neutralizing solution, an oxidizer solution, a buffer solution, a standard solution of the element to be detected and a blank solution.

The present invention (21) is the method for flow analysis or flow injection analysis according to any one of the inventions (18) to (20) wherein the sealed vessel in which the reagent solution or the auxiliary solution is encapsulated is composed of a material having an oxygen permeability of 10 fmol/m².s.Pa (2 cc/m².d.atm) or less.

The present invention (22) is a method for flow analysis or flow injection analysis, comprising the steps of introducing a sample solution into a channel; introducing a reagent solution into the channel from a sealed vessel in which the reagent solution is encapsulated, said reagent solution generating a detectable response according to the concentrations of elements to be detected, contained in the sample solution; and detecting a first response with respect to a first solution flowing through the channel (for example, a mixed solution of the sample solution and the reagent solution) and detecting or inputting a second response as a baseline value with respect to a second solution flowing through the channel (for example, a solution other than the mixed solution) said method capable of quantitatively or semi-quantitatively determining the elements to be detected, contained in the sample solution, on the basis of the difference Δ between the first response and the second response, wherein the second solution flowing through the channel contains a response suppressing substance which acts to suppress the response by the reagent solution.

Terms as used herein will now be defined with respect to their meanings. The term "sample solution" refers to a solution which is questioned as to whether it contains elements to be detected or not, examples of which include process solutions used for processes (for example, semiconductor cleaning process) (cleaning fluid) and stock solutions for such processes (new solution). The term "detectable response" includes discoloration (for example, development and fading), optical signals (for example, fluorescence) and electrical signals, with no particular limitations as long as they can be detected. The term "first solution" refers to a solution which has undergone a response reaction due to the presence of elements to be detected in a sample solution under reaction conditions for suitable responses, example of which include mixed solutions of a sample solution and a reagent solution and mixed solutions of a sample solution, a reagent solution and an auxiliary solution (for example, oxidizer solution, neutralizing solution, buffer solution or cocatalyst solution). The term "second solution" refers to a solution which does not contain a sample solution or which contains a sample solution but is in a state unlikely to undergo a response reaction in comparison to the first solution.
Examples of second solutions which do not contain a sample solution include mixed solutions of a carrier solution and a reagent solution and mixed solutions of a carrier solution, a reagent solution and another auxiliary solution (for example, oxidizer solution, buffer solution or cocatalyst solution) and examples of first solutions which contain a sample solution but are in a state unlikely to undergo a response reaction include sample solutions alone, mixed solutions of a sample solution not in a pH range suitable for a response reaction and a reagent solution and mixed solutions of a sample solution and a reagent solution in which a cocatalyst necessary for a response reaction does not exist. The term "system" is a concept which encompasses not only an apparatus but also an object such as a plant and encompasses not only a physical integration or assembly of components but also a physical division or distribution of such components. The term "element" is not particular limited and is a metallic element, for example. The term "flow analysis" is a concept which means a fluidics analysis including an automatic analysis and encompasses a flow injection analysis.

### BEST MODE FOR CARRING OUT THE INVENTION

Best modes for the present invention will be described below with reference to the drawings. The scope of rights of the present invention is not limited to the best modes as described below. In other words, the best modes are only an illustration and any forms having substantially identical constitution and similar effects as the technical ideas described in Claims shall be covered by the scope of rights of the present invention.

First, the system and method according to the present invention are preferably intended to determine trace elements and are more preferably intended to determine ultratrace elements. The term "trace" as used herein refers to a content of an element of interest which is at or below the 10⁻⁷ (ppb) order and the term "ultratrace" refers to a content of an element of interest which is at or below the 10⁻⁸ (sub-ppb) order and is more preferably at or below the 10⁻⁹ order. The lower limits are not particularly defined, but are typically of the 10⁻¹² (ppt) order. In addition, the system and method according to the present invention are suitable for on-site analyses, but are not limited on-site analyses and other applications are possible and are within the scope of rights of the present invention.

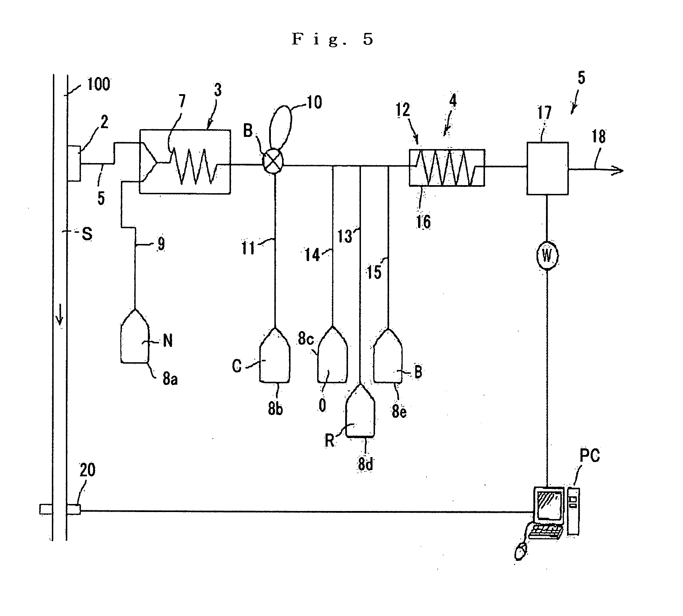

With reference to Figs. 4 and 5, a first best mode of the present invention (for monitoring new solution) will first be described. The term "new solution" as used herein is a highly concentrated stock solution used for preparing a process solution to be used for actual cleaning, for example, 98% sulfuric acid or 29% aqueous ammonia. Fig. 4 is a flowchart of the steps for the relevant FIA. As shown in Fig. 4, the FIA includes a sampling step (Step 1) of sampling continually or at a time interval from a chemical to be analyzed; a neutralizing step (Step 2) of neutralizing the sample from the sampling step to adjust its pH; a color producing reagent injection step (Step 3) of injecting, into the sample as neutralized, a color producing reagent for developing colors by undergoing an oxidative reaction catalyzed by a metal ion; and an absorbance determination step (Step 4) of determining the absorbance of the sample as injected with the color producing reagent. Each of these steps will be described in detail below.

### (1) Sampling step (S1)

Sampling step (S1) is a step of sampling from a chemical as a solution to be detected. The sampling should preferably be made at a time interval, and more preferably be made in a certain amount at a time interval. There are no particular limitations as to the procedures for sampling.

Chemicals as solutions to be detected, regardless whether they are strong acidic, weak acidic, strong alkaline or weak alkaline, may be detected for metals. Specifically, examples of strong acidic chemicals include hydrochloric acid, sulfuric acid, nitric acid or their mixtures, and examples of weak acidic chemicals include acetic acid, fluorinated acid and phosphoric acid. Also, examples of strong alkaline chemicals include potassium hydroxide solution, sodium hydroxide solution, tetrabutylammonium hydroxide, tetramethylammonium hydroxide or their mixtures, and examples of weak alkaline chemicals include aqueous ammonia.

### (2) Neutralizing step (S2)

Neutralizing step S2 is a step of neutralizing the sample by injecting a neutralizing agent into the sample. In order to prevent foaming phenomenon due to exothermic reaction, this step should preferably be made under cooling and/or with previously cooling the neutralizing agent and/or the sample. By adopting such arrangement, it will be possible to suppress the dilution of the neutralizing agent, leading to an enhancement of sensitivity. This step is however necessary only when determination is only possible with neutralization, and is therefore dispensed with for samples that can be determined without neutralization.

Neutralizing agents to be used for this neutralizing step S2 can appropriately be selected according to the type and pH of the chemicals as solutions to be detected. For example, when the solution to be detected is hydrochloric acid, aqueous ammonia and sodium hydroxide may preferably be used, and when the solution to be detected is potassium hydroxide, hydrochloric acid and acetic acid may preferably be used. It is also preferable to use a neutralizing agent which contains no metals in the view of enhancing sensitivity.

### (3) Color producing reagent injection step (S3)

Color producing reagent injection step S3 is a step of injecting, into the sample as neutralized, a color producing reagent for producing colors by undergoing an oxidative reaction catalyzed by a metal ion to be detected. In this best mode, a color producing reagent is selected as an analytical reagent because determinations are made on the basis of absorptiometry. When fluorescent determination is however selected as an analytical technique, for example, a fluorescent reagent will be selected as an analytical reagent.

A color producing reagent is appropriately selected depending on the metal to be detected. For example, when iron is to be detected in a chemical, preferable as color producing reagents are N,N-dimethyl-p-phenylenediamine as well as its reduced forms, such as Malachite Green and Methylene Blue, which can also be used for detecting copper, manganese and cobalt. Conditions, such as temperature, pH and concentration are changed as appropriate according to the metal to be detected.

Specific examples include N,N-dimethyl-p-phenylenediamine, N,N-diethyl-p-phenylenediamine, N-(p-methoxyphenyl)-p-phenylenediamine, N-(p-methoxyphenyl-N,N-dimethyl)-p-phenylenediamine, hydroxybenzaldehyde4osemicarpazone, N-phenyl-p-phenylenediamine, 2-nitroso-5-(N-propyl-N-sulfopropylamino)phenol, 2-(5-bromo-2-pyridylazo)-5-(N-propyl-N-sulfopropylamino)aniline, 2-(5-bromo-2-pyridylazo)-5-(N-propyl-N-sulfopropylamino)phenol and 2-(5-nitro-2-pyridylazo)-5-(N-propyl-N-sulfopropylamino)phenol.

In addition, at the color producing reagent injection step S3, an oxidizing agent (oxidizer solution) or buffer (buffer solution) may also be injected. Since a color producing reagent produces colors by an oxidative reaction, promotion of such an oxidative reaction may enhance the sensitivity. For example, an iron ion can serve as a catalyst for promoting the oxidative reaction of hydrogen peroxide as an oxidizing agent. Moreover, hydrogen peroxide as an oxidizing agent is added in an amount much greater than the stoichiometric amount for the redox reaction between the color producing reagent and iron (III) so that when iron (III) is consumed to produce iron (II), iron (III) will be regenerated by hydrogen peroxide (iron catalysis). Taking advantage of such catalysis, if a small amount of substance to be detected, for example, iron, exists, sufficient oxidizing agent will exist, and if time is limitless, oxidative reaction will infinitely proceed. It means that when color development of product by oxidation is utilized for detection, considerable enhancement of sensitivity can be expected. However, the instrument and method for determination must ensure that the amount of product is clearly correlated with the mass of subject of determination (preferably in linear relationship). To this end, detailed experimental support is needed. There are no limitations as to the oxidizing agent to be injected; however, hydrogen peroxide is suitable as an oxidizing agent for the use of N,N-dimethyl-p-phenylenediamine as the color producing reagent. There are also no limitations as to the buffers to be used as long as they buffer into the pH range where such color developing strength is at maximum.

### (4) Absorbance determination step (S4)

Absorbance determination step S4 is a step of determining absorbance of a sample after the color producing reagent injection step S3, the result of which makes it possible to quantitatively determine metals contained in a chemical as a solution to be detected. In this best mode, determination is made on the basis of an absorptiometric method; however, analytical technique is not limited thereto and a fluorometric method, for example, is also adoptable.

There are no limitations as to the specific methods of absorptiometry and a conventionally known detector, etc. may be used. In addition, wavelengths for determination may appropriately be set according to the color producing reagent. When N,N-dimethyl-p-phenylenediamine is used as a color producing reagent, the wavelengths will approximately be from 510 nm to 530 nm.

With reference to Fig. 5, this best mode will be described in more detail by way of illustration of a semiconductor manufacturing process. For a semiconductor manufacturing process, chemicals used are strong acids or alkalis, causing a problem of extremely difficult handling. Also, concentrated sulfuric acid, for example, needs to be neutralized for its extremely high concentration, but such neutralization will also lower the concentration of impurity elements, requiring more sensitive detection.

In addition, many of the pipings for a semiconductor manufacturing process is composed of iron-based material lined with an chemical resistant resin, such as tetrafluoride resin and defects on such lining resin, such as breakages are responsible for contamination by a metal, such as iron. Accordingly, description will be made by way of illustration for concentrated sulfuric acid with iron (Fe) as the element to be detected. Those of conditions that are not inherent to iron, such as reagents are applicable to the case of microanalyzing other metallic elements and it should not be construed that application to other elements be denied or the scope of rights of the invention of this application be limited just because iron is herein illustrated as the best embodiment.

The detector as illustrated in Fig. 5 is a type of flow injection analyzer and comprises at least sampling means 2 for sampling at a certain time interval from a chemical used in a semiconductor manufacturing process; neutralizing means 3 for neutralizing the sample collected by the sampling means 2 by mixing it with a neutralizing reagent for neutralizing the sample to adjust its pH; reaction means 4 for mixing in a predetermined ratio the sample neutralized by the neutralizing means, a color producing reagent which produces colors by undergoing an oxidative reaction catalyzed by a metal ion and an oxidizing agent to produce a color developing reaction; and absorptiometric means 5 for determining absorbance of the sample after undergoing the color developing reaction by the reaction means.

First, the sampling means 2 is provided along a chemical flow pipe 100 through which a chemical to be used in a semiconductor manufacturing process is flowed and collects an amount of sample S at a certain time interval from the chemical flow pipe 100.

The sample collected by the sampling means 2 is then fed into a sample flow pipe 5. The sample flow pipe 5 is connected to a neutralizing pipe 7 which acts as neutralizing means 3.

An neutralizing reagent N is encapsulated in a reagent bag 8a made of, for example, a resin and injected into the neutralizing pipe 7 via a neutralizing reagent flow pipe 9 to which the reagent bag 8a is connected. In this way, the reagents to be used in the instrument of the present invention, including the neutralizing reagent N, are used as encapsulated in the reagent bags, so that contamination by impurities from outside the instrument may be prevented and more sensitive analyses may be made.

The sample with the neutralizing reagent N flowed into the neutralizing pipe 7 across the neutralizing means 3 is neutralized while passing through the neutralizing pipe 7. In the meantime, neutralization can be made more conveniently and reproducibly by appropriately adjusting the flow rate of the sample flowed into the neutralizing pipe 7 and the flow rate of the neutralizing reagent N.

The neutralizing pipe 7 is connected to an automatic selector valve B. The automatic selector valve B is provided with a sample metering tube 10 capable of holding a certain amount of sample.

The selector valve B is connected with a carrier flow pipe 11. The carrier flow pipe 11 is connected at one end with a reagent bag 8b for encapsulating a carrier C.

The automatic selector valve B is selected at an appropriate timing while the carrier C is flowed into the carrier flow pipe 11 so that the carrier C may flow into the sample holding tube 10. Consequently, the sample held in the sample holding tube 10 is forced out by the carrier C into a reaction tube 12 across the reaction means 4.

Connected upstream the reaction means 4 are a color producing reagent flow pipe 13 which is connected to a reagent bag 8c in which a color producing reagent R is encapsulated, said reagent producing colors in the reaction tube by undergoing an oxidative reaction catalyzed by a metal ion; an oxidizing agent flow pipe 14 which is connected to a reagent bag 8d in which an oxidizing agent O is encapsulated; and a buffer solution flow pipe 15 which is connected to a reagent bag 8e in which a buffer solution B is encapsulated.

The reaction tube 4 mixes the color producing reagent R, the oxidizing agent O and the buffer solution B used as necessary to the sample S or the carrier C to promote the oxidative reaction. With a flow injection analyzer, a reaction time can be controlled by adjusting the length of the reaction tube 12. It is also possible to adjust the reaction temperature by positioning the reaction tube 12 (in particular, its downstream side) within a temperature adjustor 16.

As described above, the reagents are preferably encapsulated in the corresponding reagent bags 8a to 8e.

Moreover, each flow pipe is provided with a mechanism for adjusting the flow rate of a reagent (not shown). Therefore, conditions most favorable for the color producing reagent to develop colors may easily be created by the adjustment of the flow rate through each flow pipe, depending on the pH and concentration of the solution flowing through the flow pipe.

The reaction tube 12 is connected to an absorptiometer 17 which is absorptiometric means. The absorptiometer 17 determines the absorbance of the sample S or the carrier C. The sample having its absorbance determined is discharged via a discharge duct 18.

In the above description, the neutralizing agent, the oxidizing agent and the buffer are applied to the sample in the mentioned order. However, this order may not strictly be adhered to as long as color development is realized.

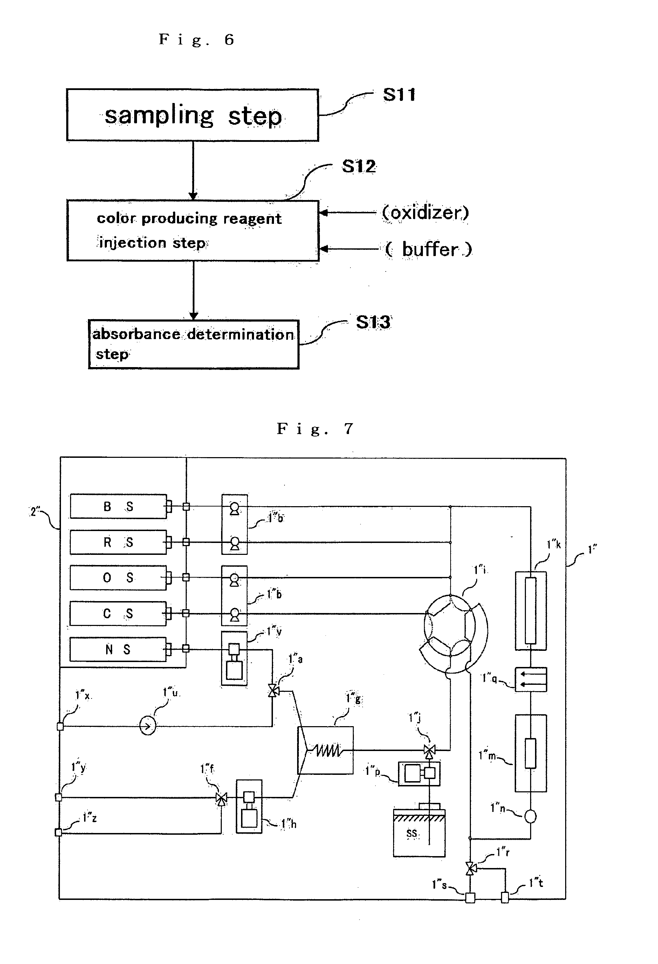

Next, with reference to Figs. 1 and 6, a second best mode of the present invention (for monitoring process solution) will be described. The term "process solution" as used herein means a solution of a diluted new solution used for actual cleaning, to which hydrogen peroxide, for example, is added (for example, 36% hydrochloric acid:30% hydrogen peroxide:ultrapure water=1:5:400). First, Fig. 6 is a flowchart of the steps of the relevant FA. As shown in Fig. 6, at Step 11, a sample is collected. In this case, unlike FIA, the sample is continually collected, basically, flowing steadily through the channel. Next at Step 12, a color producing reagent (and optionally an oxidizing agent and buffer) is injected for a period of time. As a result, portion of the sample that is injected with the color producing reagent becomes capable of undergoing a color developing reaction. Then at Step 13, both the portion of the sample that was injected with the color producing reagent and portion of the sample that was not injected with the color producing reagent will be determined for their absorbance.

Next, Fig. 1 is a schematic drawing of an instrument according to this best mode. It differs from the first best mode in that it has no carrier solution, that the sample solution continues flowing through the channel and that the color producing reagent (and auxiliary solutions such as oxidizing agent and buffer) is injected synchronously into the sample solution for a period of time. Apart from the above, it is identical with the first best mode and the numerals for members having identical functions are suffixed with "(2)". With regard to the differences, the sample solution inlet 2 (2) continually collects a sample solution S from a cleaning channel 100 (2) and keeps feeding the sample solution S into a channel 5 (2) by a pump not shown. With respect to an oxidizer solution O (2), a reagent solution R (2) and a buffer B (2), these reagent and auxiliary solutions are simultaneously injected into the sample solution S for a period of time by synchronous actuation of pumps not shown.

For such a detector as in the first best mode (FIA) and the second best mode (FA), its detection sensitivity will be enhanced by an increase of the differential between the detection background value and the sample peak value, Δ. Roughly classified, there are two approaches as refinement for increasing the detection sensitivity by FA and FIA.

The first approach is to lower the detection background to thereby stabilize the noise at a low level and amplify or magnify a minute Δ for an accurate determination. The second is to improve the color developing efficiency of elements to be detected to thereby substantially enlarge the sample peaks and to improve the S/N ratio to thereby amplify Δ.

According to the present invention, following procedures are used for each approach.

Detection background will be increased mainly by (1) contamination in a channel by elements to be detected from other sources than the analytical sample and by (2) color development by reaction of the color producing reagent with other elements than the elements to be detected. According to the present invention, a decrease of background will be sought by suppression of these two factors.

First, with regard to (1), solution was to lower the amount of contamination by the elements to be detected from other sources than the analytical sample and to include, in the carrier solution composing the background, a substance for inhibiting the color development of the elements to be detected (color development inhibitor).

According to the present invention, such a color development inhibitor is admixed to the carrier C encapsulated in the reagent bag 8b. To come into consideration as a color development inhibitor are typical chelating reagents, such as ethylenediamine tetraacetate, ethyleneglycol bis(2-aminoethyl)etherdiamine tetraacetate, diethylenetriamine pentaacetate, triethylenetetramine hexaacetate and other salts, and inorganic complexing agents of pyrophosphoric acid.

The concentration of the color development inhibitor is preferably from 10⁻¹³ M (mol/l) to 10⁻³ M (mol/l). At a concentration lower than 10⁻¹³ M (mol/l), the effect of color development inhibition will lessen, while at 10⁻³ M (mol/l) or more, no further effect will result.

Admixing the color development inhibitor to the carrier will decrease the detection background across the carrier, lessen the noise, and stabilize the background so that a minute Δ may be magnified and precisely determined. Consequently, the difference Δ from the detected level for the sample will relatively be large to therefore increase the detection sensitivity.

The color development inhibitor may not only be admixed to the carrier but also to the reagent solution or other auxiliary solutions (for example, oxidizing agent, buffer and neutralizing agent).

In addition, with respect to (2) above, the inventors have found that the most significant causative agent responsible for pseudo color development is oxygen in making determination of sub-ppb order to ppt orders in FA and FIA. Further, they also found that it is important to encapsulate various agents (especially the color producing reagent solution) in bags having an oxygen transmissivity (oxygen permeability) at or below a predetermined value in enabling a highly sensitive ultramicroanalysis in FA and FIA. Specifically, the oxygen permeability of such a bag is 10 fmol/m².s.Pa (2 cc/m².d.atm) or less, preferably 5 fmol/m².s.Pa (1 cc/m².d.atm) or less, and more preferably 2.5 fmol/m².s.Pa (0.5 cc/m².d.atm) or less, at 25°C and 80% relative humidity.

By encapsulating the agents into the bags in this manner, development of color producing reagents during storage and transportation of the coloring solutions, which has traditionally been a problem in making determination of sub-ppb order to ppt order, can be suppressed to an extent negligible for achieving the objects herein. Moreover, by encapsulating not only the color developing solution but also other auxiliary agents (carrier, oxidizing agent, neutralizing agent, buffer) into similar bags, pseudo color development upon mixture with the color producing reagent can be suppressed. In encapsulating various solutions in the bags, it is needless to say that these agents must be degassed before encapsulating.

Also, alternatively (or in combination with the above means), the inventors have found that foams contained even marginally in solutions can cause a serious problem in making determination of sub-ppb order to ppt order in FA and FIA. On the basis of such finding, they found, after conducting a keen examination, that it is preferable to maintain the oxygen content in various solutions (especially, coloring solution) at or below 5 ppm. For this, techniques for maintaining it at or below 5 ppm include reducing pressure to remove dissolved oxygen.

In prescribing values according to the present invention, oxygen content is based on Water Quality-Determination of Dissolved Oxygen-Electrochemical Probe Method as described in Testing Method for Dissolved Oxygen (JIS K 0400-32-30) for example. Oxygen permeability can be determined according to Gas Permeability Testing Method for Plastic Film and Sheet as described in JIS K7126, for example.

The second approach for enhancing detection accuracy will next be described.

In order to enhance detection accuracy, conditions are preferably established, where catalytic effects of elements to be detected, contained in a sample are most likely to appear and are contributable to color development. When an element to be detected is Fe and a color producing reagent is N,N-dimethyl-p-phenylenediamine, the pH should desirably be maintained preferably from 3.0 to 9.0 for a period of time for a color developing reaction to take place. Such maintenance should preferably be realized in a temperature controlled bath connected to an absorptiometric instrument or be realized immediately before the absorptiometric instrument.

### EXAMPLES

### Example 1 [FIA (analysis for iron)]

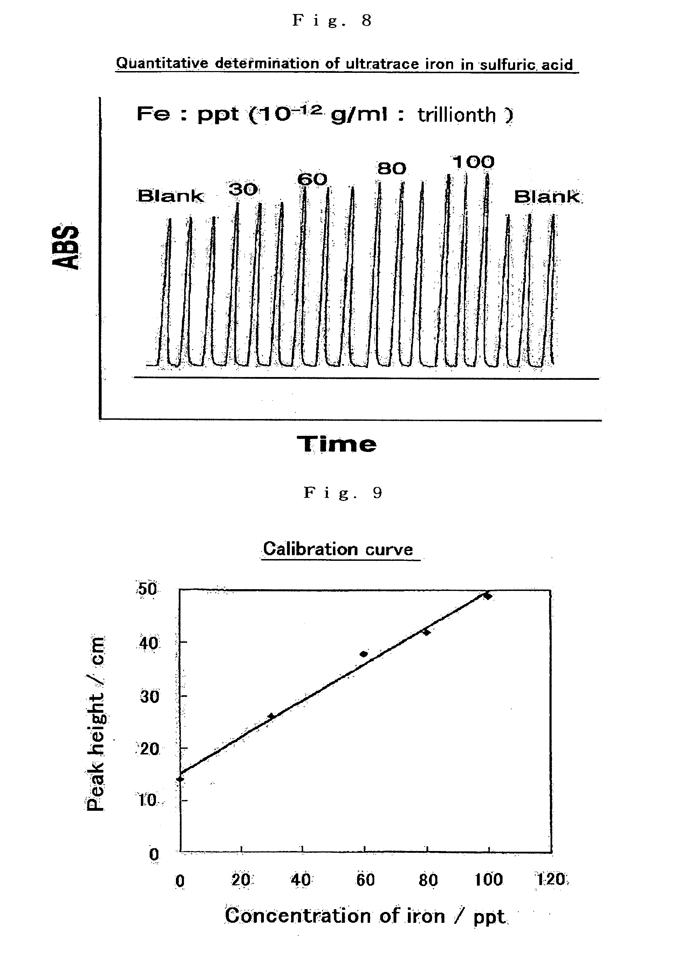

With reference to Fig. 7, the instrument and analytical method according to this Example will first be described. For pumping of the sample S and the neutralizing solution NS, a Cavro XL 3000 Modular Digital Pump (1"h, 1"v) manufactured by Carvo Scientific Instruments, Inc. was used. As the sample S, 300 µl of five types of 97% (18.2 mol/l) sulfuric acid (iron concentrations=0, 30, 60, 80 and 100 ppt) were used and fed at a flow rate of 50 µl/min. As the neutralizing solution NS, 5,500 µl of 2.85% (1.65 mol/l) aqueous ammonia (oxygen content: 2.5 ppm) encapsulated in a sealed vessel (oxygen permeability: 0.8 cc/cm².d.atm) were used and fed at a flow rate of 916.7 µl/min. For pumping of the carrier solution CS, the oxidizer solution OS, the color producing reagent RS and the buffer solution BS, an APZ-2000 Double Plunger Pump 1"b manufactured by Asahi Techneion Co., Ltd. was used. As the carrier solution CS, 0.97 mol/l of aqueous ammonium sulfate solution (oxygen content: 2.5 ppm) encapsulated in a sealed vessel (oxygen permeability: 0.8 cc/cm².d.atm) was used and fed at a flow rate of 0.8 ml/min. Also, 10⁻⁶ mol/l of ethylenediamine tetraacetic acid was mixed into the carrier as a color development inhibitor. As the oxidizer solution OS, 0.3% aqueous hydrogen peroxide (oxygen content: 2.5 ppm) encapsulated in a sealed vessel (oxygen permeability: 0.8 cc/cm².d.atm) was used and fed at a flow rate of 0.8 ml/min. As the color producing reagent solution RS, 4 mmol/l N,N-dimethyl-p-phenylenediamine (oxygen content: 2.5 ppm) encapsulated in a sealed vessel (oxygen permeability: 0.8 cc/cm².d.atm) was used and fed at a flow rate of 0.5 ml/min. As the buffer solution BS, 1.3 mol/l aqueous ammonium acetate solution (oxygen content: 2.5 ppm) encapsulated in a sealed vessel (oxygen permeability: 0.8 cc/cm²d.atm) was used and fed at a flow rate of 0.5 ml/min. As the sample metering tube (injection valve 1"i) a tube with an inner diameter of 0.8 mm and a length of 160 cm was used. Solutions as neutralized in a neutralizing tube (cooling portion 1"g), the oxidizer solution OS, the color producing reagent solution RS and the buffer solution BS were mixed in a reaction tube with an inner diameter of 0.8 mm and a length of 2 m. The mixed solution was kept at 35°C in a thermal regulator 1 "k. After passing through an air cooling portion 1 "q, the absorbance of this colored solution was determined with a detector (absorptiometer 1"m) at a maximum absorptive wavelength of 514 nm. A tube with an inner diameter of 0.8 mm was used to form the channel.

Shown in Fig. 8 is a calibration curve for iron determined by the above method at 30 ppt to 100 ppt in concentrated sulfuric acid. For this illustration, the pH was kept at 5.5 in order to cause a color developing reaction. As a result, as shown in Fig. 8, a difference Δ in accordance with the extent of color development (difference in the extent of color development between the carrier and the sample) was observed between the color development in the carrier designated as Blank and the color development in the sample containing iron at a concentration of 30 ppt to 100 ppt. Also, Fig. 9 shows a correlation between Δ and iron concentration. As shown in Fig. 9, this correlation represents a good linear relationship and it was verified that determination of iron in the ppt order was possible by the method according to the present invention.

### Example 2 [FA (analysis for iron, copper and other elements)]

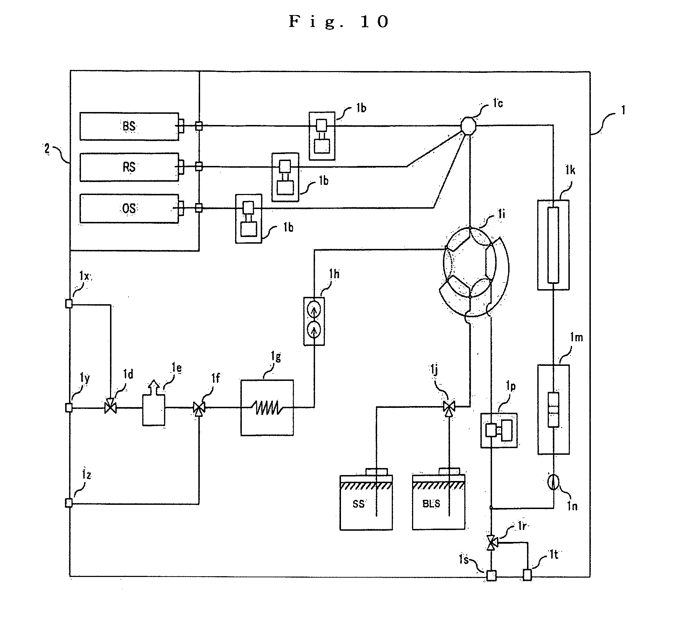

With reference to Fig. 10, the instrument and analytical method according to this Example will first be described. For pumping of the sample S, an APZ-2000 Double Plunger Pump 1h manufactured by Asahi Techneion Co., Ltd. was used. As the sample S, 300 µl of 0.01 M hydrochloric acid to which metals were added in predetermined amounts as shown in Table below were used and fed at a flow rate of 50 µl/min.

**Table 1**

| metals added | concentration of metals |
|---|---|
| Fe | 0, 0.5 and 1.0 ppb |
| Cu | 0,1.0 and 5.0 ppb |
| Fe, Cu | 1.0 ppb each |
| Fe, Cu, Al, B, Cd, Mn, Mo, Ni, Pb, Zn | 1.0 ppb each |

For pumping of the oxidizer solution OS, the color producing reagent solution RS and the buffer solution BS, a syringe pump 1b was used. As the oxidizer solution OS, 0.3% aqueous hydrogen peroxide (oxygen content: 2.5 ppm) encapsulated in a sealed vessel (oxygen permeability: 0.8 cc/cm².d.atm) was used and fed at a flow rate of 0.8 ml/min. As the color producing reagent solution RS, 4 mmol/l N,N-dimethyl-p-phenylenediamine (oxygen content: 2.5 ppm) encapsulated in a sealed vessel (oxygen permeability: 0.8 cc/cm².d.atm) was used and fed at a flow rate of 0.5 ml/min. As the buffer solution BS, 1.3 mol/l aqueous ammonium acetate solution (oxygen content: 2.5 ppm) encapsulated in a sealed vessel (oxygen permeability: 0.8 cc/cm².d.atm) was used and fed at a flow rate of 0.5 ml/min. These three syringe pumps 1b were actuated synchronously with one another so that all the solutions were injected into the same location of the flowing sample S. The sample S, the oxidizer solution OS, the color producing reagent solution RS and the buffer solution BS were mixed in a reaction tube with an inner diameter of 0.8 mm and a length of 2 m. This mixed solution was kept at 35°C in a thermal regulator 1k. The absorbance of this colored solution was determined with a detector (absorptiometer) 1m at a maximum absorptive wavelength of 514 nm. A tube with an inner diameter of 0.8 mm was used to form the channel.

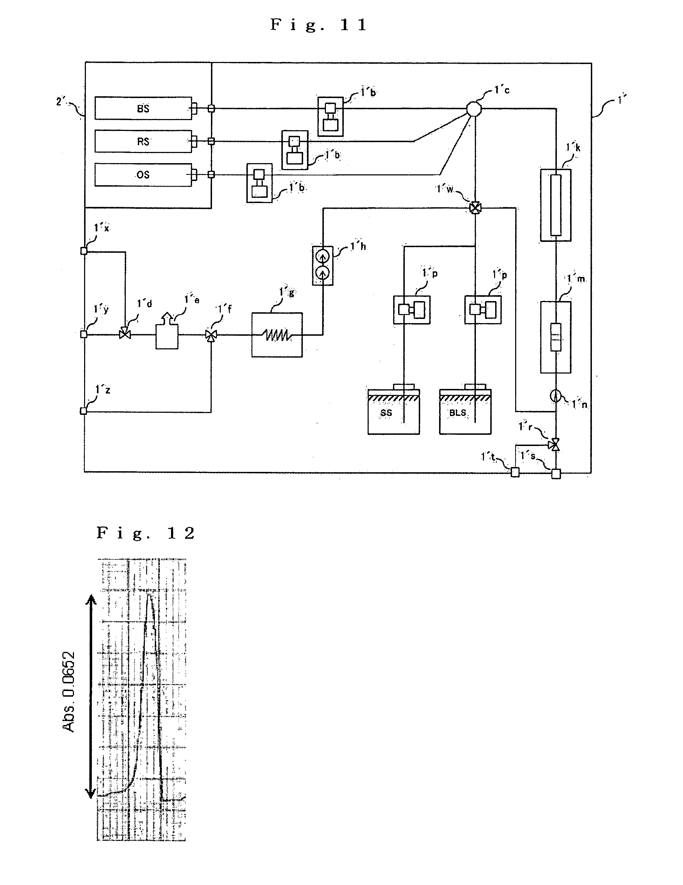

Since a calibration curve must be generated in determining concentration, it is provided that the sample solution S can be switched with a standard solution SS and blank solution BLS by an injection valve 1i. Fig. 10 shows an embodiment in which switching between the sample solution S and the standard solution SS or the blank solution BLS is made by the injection valve 1i, while Fig. 11 shows an embodiment in which switching is made by a selector valve 1'w.

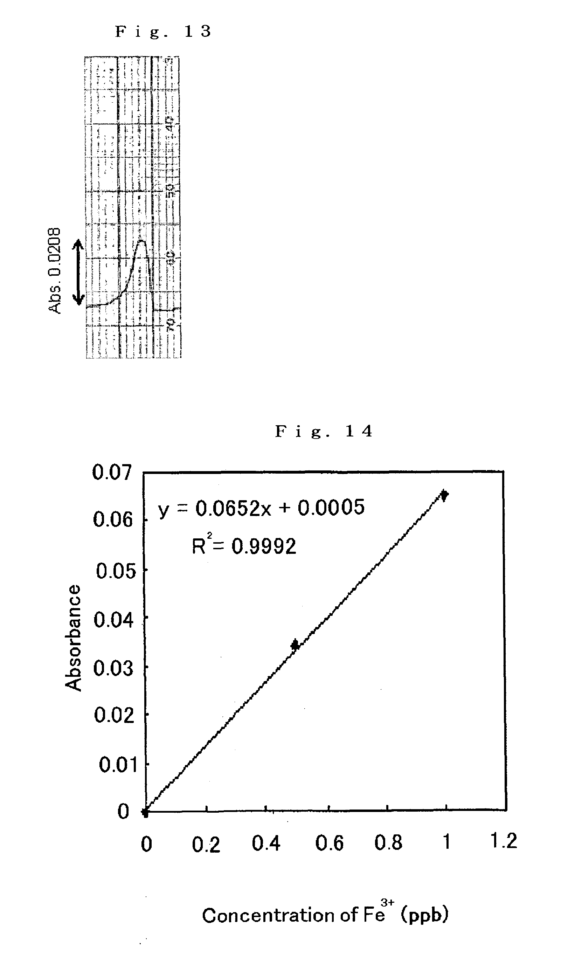

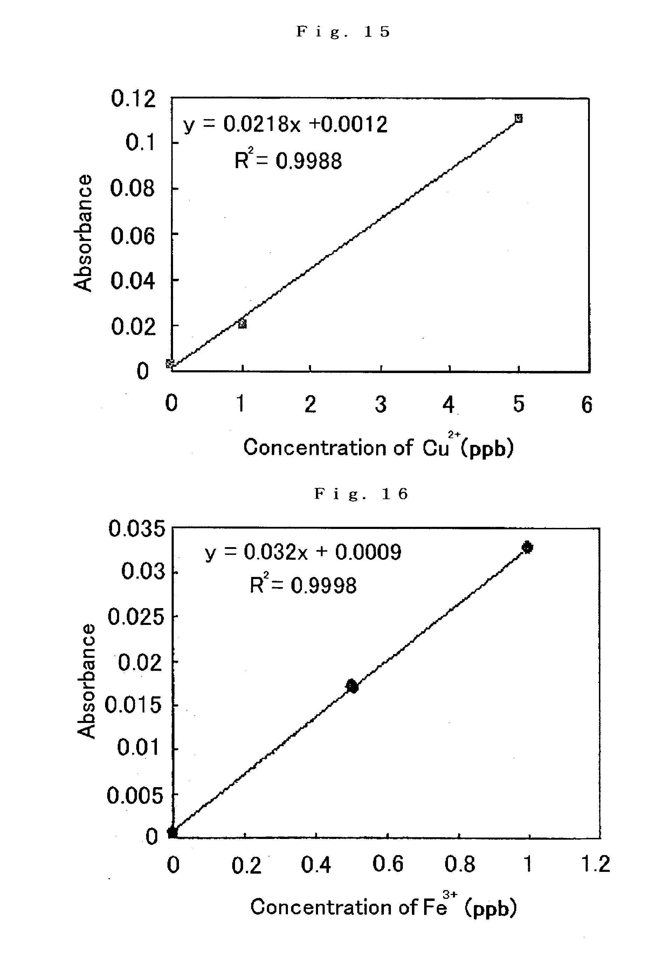

The results are shown in Figs. 12 to 15 and Table 2. Fig. 12 is a chart representing the absorbance peak for iron at 1 ppb at a wavelength of 514 nm. Fig. 13 is a chart representing the absorbance peak for copper at 1 ppb at a wavelength of 514 nm. Fig. 14 is a calibration curve representing the relationship between absorbance and iron concentration at a wavelength of 514 nm. Fig. 15 is a calibration curve representing the relationship between absorbance and copper concentration at a wavelength of 514 nm. As shown in Figs. 12 and 13, the detection background is so sufficiently lowered that the differential between the detection background value and the sample peak value, Δ, is enlarged. It was observed that the sensitivity for iron was nearly three times the sensitivity for copper. As shown in Figs. 14 and 15, it was observed that correlation was extremely high for both iron and copper even at the ppb order, with correlation constant being as high as 0.999. In addition, as shown in Table 2, when iron (1 ppb) plus copper (1 ppb) were added, the absorbance (0.0860) was the sum of the absorbance based on 1 ppb of iron (0.0652) and the absorbance based on 1 ppb of copper (0.0208) and it was confirmed that the total amount of iron and copper was determinable. In addition, when iron plus copper plus other metals (1 ppb for all) were added, the absorbance determined (0.0857) was nearly the same as the absorbance for iron plus copper (1 ppb) (0.0860) and it was therefore confirmed that the effect from other elements was negligible.

**Table 2**

| | Fe³⁺ 1 ppb + Cu²⁺ 1 ppb | Al, B, Cd, Cu, Fe, Mn, Mo, Ni, Pb, Zn, 1 ppb each |
|---|---|---|
| absorbance | 0.0860 | 0.0857 |

### Example 3 [FIA (analysis for iron)]

With reference to Fig. 7, the instrument and analytical method according to this Example will first be described. Since a neutralizing solution is not used for this Example, "NS" and the line for it in Fig. 7 are non-existent. For pumping of the sample S, a Cavro XL 3000 Modular Digital Pump (1"h, 1"v) manufactured by Carvo Scientific Instruments, Inc. was used. As the sample S, 0.8 ml of APM solution (29% ammonia:30% hydrogen peroxide:ultrapure water=1:5:400) to which 0, 0.5 and 1 ppb of iron was added was used. For pumping of the carrier solution CS, the oxidizer solution OS, the color producing reagent solution RS and the buffer solution BS, an APZ-2000 Double Plunger Pump 1"b manufactured by Asahi Techneion Co., Ltd. was used. As the carrier solution CS, 0.037 M (0.071%) ammonia plus 0.11 M (0.37%) hydrogen peroxide (pH 10.86) encapsulated in a sealed vessel (oxygen permeability: 0.8 cc/cm².d.atm) was used and fed at a flow rate of 0.8 ml/min. As the oxidizer solution OS, 0.88 M (3.0%) hydrogen peroxide plus 0.05 M (0.15%) hydrochloric acid (pH 1.26) (oxygen content: 2.5 ppm) encapsulated in a sealed vessel (oxygen permeability: 0.8 cc/cm².d.atm) was used and fed at a flow rate of 0.8 ml/min. As the color producing reagent solution RS, 4 mM (0.084%) N,N-dimethyl-p-phenylenediamine (DPD, pH 1.87) (oxygen content: 2.5 ppm) encapsulated in a sealed vessel (oxygen permeability: 0.8 cc/cm².d.atm) was used and fed at a flow rate of 0.5 ml/min. As the buffer solution BS, 1.3 mol/l aqueous ammonium acetate solution (pH 6.34, oxygen content: 2.5 ppm) encapsulated in a sealed vessel (oxygen permeability: 0.8 cc/cm².d.atm) was used and fed at a flow rate of 0.5 ml/min. As a sample metering tube (injection valve 1"i) a tube with an inner diameter of 0.8 mm and a length of 160 cm was used. The carrier solution S or sample solution flowing through the channel, the oxidizer solution OS, the color producing reagent solution RS and the buffer solution BS were mixed in a reaction tube with an inner diameter of 0.8 mm and a length of 2 m. The mixed solution was kept at 35°C in a thermal regulator 1"k. After passing through an air cooling portion 1"q, the absorbance of this colored solution was determined with a detector (absorptiometer 1 "m) at a maximum absorptive wavelength of 514 nm. A tube with an inner diameter of 0.8 mm was used to form the channel.

The results are shown in Fig. 16. Fig. 16 is a calibration curve representing the relationship between absorbance and iron concentration at a wavelength of 514 nm. As shown in Fig. 16, at the day of preparation, the absorbance increased in proportion to the concentration of iron and indicated an absorbance of 0.032 at 1 ppb of iron, showing that sufficient sensitivity of the same degree with iron in hydrochloric acid was obtained. From the results above, determination of iron in dilute APM solution was obtained with sensitivity of the same degree with iron in hydrochloric acid, and therefore it was found that a quantitative determination with sufficient sensitivity can be attained without passing the iron in the dilute APM solution through a pretreatment step such as neutralization.

Description was made herein on the premise that trace elements of the ppt order are analyzed; however, the invention of this application is also applicable to elemental analyses of the ppb order. Such applications are also within the scope of the present invention and are encompassed by the scope of rights of the invention as a matter of course.

Illustration was made in BEST MODE and EXAMPLES herein on the premise of color developing reactions; however, the present invention is also applicable to fluorescent reactions. In such a case, however, a fluorescent substance (fluorescent reagent) that changes its fluorescent intensity according to the concentration of elements to be analyzed, contained in a sample and a carrier would be used instead of a color producing reagent. Also as a substance to be added to the carrier, a substance inhibiting fluorescent reaction would be added, instead of a color development inhibitor.

### BRIEF DESCRIPTION OF THE DRAWINGS

Fig. 1 is a schematic drawing of an FA instrument according to the invention;
Fig. 2 is a simplified drawing of an FIA instrument according to the invention;
Fig. 3 is a chart representing the FIA instrumentation principle according to the invention;
Fig. 4 is a flow diagram representing the steps for FIA instrumentation according to the invention;
Fig. 5 is a schematic drawing of an FIA instrument used according to the invention;
Fig. 6 is a flow diagram representing the steps for FA instrumentation according to the invention;
Fig. 7 is a schematic drawing of an FIA instrument in Examples 1 and 3;
Fig. 8 is a data diagram for determination of trace iron in concentrated sulfuric acid in Example 1;
Fig. 9 is a data diagram representing the correlation between iron concentration and degree of color development for determination of trace iron in concentrated sulfuric acid in Example 1;
Fig. 10 is a schematic drawing of an FA instrument in Example 2;
Fig. 11 is a schematic drawing of a variant of the FA instrument of Fig. 10;
Fig. 12 is a chart representing the absorbance peak for iron at 1 ppb at a wavelength of 514 nm in Example 2;
Fig. 13 is a chart representing the absorbance peak for copper at 1 ppb at a wavelength of 514 nm in Example 2;
Fig. 14 is a calibration curve representing the relationship between absorbance and iron concentration at a wavelength of 514 nm in Example 2;
Fig. 15 is a calibration curve representing the relationship between absorbance and copper concentration at a wavelength of 514 nm in Example 2; and
Fig. 16 is a calibration curve representing the relationship between absorbance and iron concentration at a wavelength of 514 nm in Example 3.

### DESIGNATION OF REFERENCE NUMERALS

1: FA instrument, 1b: syringe pump, 1c: mixer, 1d: cleaning water selector valve, 1e: gas-liquid separator, 1f: sample inlet valve, 1g: cooler (radiator), 1h: double plunger pump, 1i: injection valve, 1j: standard solution selector valve, 1k: temperature controlled bath, 1m: absorptiometer, 1n: check valve, 1p: syringe pump, 1r: electromagnetic air release valve, 1s: waste fluid, It: airtrap (externally mounted),
1x: cleaning water inlet, 1y: sample inlet, 1z: sample outlet, 2: detection chemical cartridge (cold storage)
1': FA instrument, 1'b: syringe pump, 1'c: mixer, 1'd: cleaning water selector valve, 1'e: gas-liquid separator, 1'f: sample inlet valve, 1'g: cooler (radiator), 1'h: double plunger pump, 1'j: standard solution selector valve, 1'k: temperature controlled bath, 1'm: absorptiometer, 1'n: check valve, 1'p: syringe pump, 1'r: electromagnetic air release valve, 1's: waste fluid, 1't: airtrap (externally mounted), 1'w: standard solution selector valve, 1'x: cleaning water inlet, 1'y: sample inlet, 1'z: sample outlet, 2': detection chemical cartridge (cold storage)
1": FA instrument, 1"b: plunger pump, 1"f: sample inlet valve, 1"g: cooler (radiator), 1"h: sample pump, 1"i: injection valve, 1"j: sample suction valve, 1"k: temperature controlled bath, 1"m: absorptiometer, 1"n: check valve, 1"p: syringe pump, 1"r: electromagnetic air release valve, 1"s: waste fluid, 1"t: airtrap (externally mounted), 1"u: cleaning water pump, 1"v: neutralizing solution pump, 1"x: cleaning water inlet, 1"y: sample inlet, 1"z: sample outlet, 2": detection chemical cartridge (cold storage)

## Claims

1. A flow analysis system or flow injection analysis system, capable of quantitatively or semi-quantitatively determining elements to be detected, contained in a sample solution, to which a sealed vessel is connected in which a reagent solution is encapsulated, said reagent solution generating a detectable response according to the concentrations of the elements to be detected, contained in the sample solution, wherein the sealed vessel in which the reagent solution is encapsulated is composed of a material having an oxygen permeability of 10 fmol/m².s.Pa (2 cc/m².d.atm) or less.

2. The flow analysis system or flow injection analysis system according to Claim 1, to which further connected is a sealed vessel in which an auxiliary solution, other than the reagent solution, necessary for the response determination is encapsulated, wherein the sealed vessel in which the auxiliary solution is encapsulated is composed of a material having an oxygen permeability of 10 fmol/m².s.Pa (2 cc/m².d.atm) or less.

3. The flow analysis system or flow injection analysis system according to Claim 2, wherein the auxiliary solution is at least one selected from a carrier solution, a neutralizing solution, an oxidizer solution, a buffer solution, a standard solution of the element to be detected and a blank solution.

4. The flow analysis system or flow injection analysis system according to any one of Claims 1 to 3, wherein the oxygen content in the reagent solution or the auxiliary solution as encapsulated in the sealed vessel is 5 ppm or less.

5. A sealed vessel to be used in the flow analysis system or flow injection analysis system according to any one of Claims 1 to 4, which is composed of a material having an oxygen permeability of 10 fmol/m².s.Pa (2 cc/m².d.atm) or less, and in which a reagent solution or an auxiliary solution is encapsulated.

6. The sealed vessel according to Claim 5, wherein the oxygen content in the reagent solution or the auxiliary solution as encapsulated in the sealed vessel is 5 ppm or less.

7. A flow analysis system or flow injection analysis system, capable of quantitatively or semi-quantitatively determining elements to be detected, contained in a sample solution, to which a sealed vessel is connected in which a reagent solution is encapsulated, said reagent solution generating a detectable response according to the concentrations of the elements to be detected, contained in the sample solution, wherein the oxygen content in the reagent solution as encapsulated in the sealed vessel is 5 ppm or less.

8. The flow analysis system or flow injection analysis system according to Claim 7, to which further connected is a sealed vessel in which an auxiliary solution, other than the reagent solution, necessary for the response determination is encapsulated, wherein the oxygen content in the reagent solution as encapsulated in the sealed vessel is 5 ppm or less.

9. The flow analysis system or flow injection analysis system according to Claim 8, wherein the auxiliary solution is at least one selected from a carrier solution, a neutralizing solution, an oxidizer solution, a buffer solution, a standard solution of the element to be detected and a blank solution.

10. The flow analysis system or flow injection analysis system according to any one of Claims 7 to 9, wherein the sealed vessel in which the reagent solution or the auxiliary solution is encapsulated is composed of a material having an oxygen permeability of 10 fmol/m².s.Pa (2 cc/m².d.atm) or less.

11. A sealed vessel to be used in the flow analysis system or flow injection analysis system according to any one of Claims 7 to 10, in which a reagent solution or an auxiliary solution having an oxygen content of 5 ppm or less is encapsulated.

12. The sealed vessel according to Claim 11, which is composed of a material having an oxygen permeability of 10 fmol/m².s.Pa (2 cc/m².d.atm) or less.

13. A flow analysis system or flow injection analysis system, capable of quantitatively or semi-quantitatively determining elements to be detected, contained in a sample solution, on the basis of the difference Δ between a first response with respect to a first solution flowing through a channel and a second response as a baseline value with respect to a second solution flowing through the channel, wherein the second solution flowing through the channel contains a response-suppressing substance which acts to suppress the response by the reagent solution.

14. A method for flow analysis or flow injection analysis, comprising the steps of introducing a sample solution into a channel; introducing a reagent solution into the channel from a sealed vessel in which the reagent solution is encapsulated, said reagent solution generating a detectable response according to the concentrations of elements to be detected, contained in the sample solution; and detecting a first response with respect to a first solution flowing through the channel and detecting or inputting a second response as a baseline value with respect to a second solution flowing through the channel, said method capable of quantitatively or semi-quantitatively determining the elements to be detected, contained in the sample solution, on the basis of the difference Δ between the first response and the second response, wherein the sealed vessel in which the reagent solution is encapsulated is composed of a material having an oxygen permeability of 10 fmol/m².s.Pa (2 cc/m².d.atm) or less.

15. The method for flow analysis or flow injection analysis according to Claim 14, further comprising the step of introducing an auxiliary solution into the channel, to which a sealed vessel, in which the auxiliary solution, other than the reagent solution, necessary for the response determination is encapsulated, is connected, wherein the sealed vessel in which the auxiliary solution is encapsulated is composed of a material having an oxygen permeability of 10 fmol/m².s.Pa (2 cc/m².d.atm) or less.

16. The method for flow analysis or flow injection analysis according to Claims 15, wherein the auxiliary solution is at least one selected from a carrier solution, a neutralizing solution, an oxidizer solution, a buffer solution, a standard solution of the element to be detected and a blank solution.

17. The method for flow analysis or flow injection analysis according to any one of Claims 14 to 16, wherein the oxygen content in the reagent solution or the auxiliary solution as encapsulated in the sealed vessel is 5 ppm or less.

18. A method for flow analysis or flow injection analysis, comprising the steps of introducing a sample solution into a channel; introducing a reagent solution into the channel from a sealed vessel in which the reagent solution is encapsulated, said reagent solution generating a detectable response according to the concentrations of elements to be detected, contained in the sample solution; and detecting a first response with respect to a first solution flowing through the channel and detecting or inputting a second response as a baseline value with respect to a second solution flowing through the channel, said method capable of quantitatively or semi-quantitatively determining the elements to be detected, contained in the sample solution, on the basis of the difference Δ between the first response and the second response, wherein the oxygen content in the reagent solution as encapsulated in the sealed vessel is 5 ppm or less.

19. The method for flow analysis or flow injection analysis according to Claim 18, further comprising the step of introducing an auxiliary solution into the channel from a sealed vessel in which the auxiliary solution, other than the reagent solution, necessary for the response determination is encapsulated, wherein the oxygen content in the reagent solution as encapsulated in the sealed vessel is 5 ppm or less.

20. The method for flow analysis or flow injection analysis according to Claim 19, wherein the auxiliary solution is at least one selected from a carrier solution, a neutralizing solution, an oxidizer solution, a buffer solution, a standard solution of the element to be detected and a blank solution.

21. The method for flow analysis or flow injection analysis according to any one of Claims 18 to 20, wherein the sealed vessel in which the reagent solution or the auxiliary solution is encapsulated is composed of a material having an oxygen permeability of 10 fmol/m².s.Pa (2 cc/m².d.atm) or less.

22. A method for flow analysis or flow injection analysis, comprising the steps of introducing a sample solution into a channel; introducing a reagent solution into the channel from a sealed vessel in which the reagent solution is encapsulated, said reagent solution generating a detectable response according to the concentrations of elements to be detected, contained in the sample solution; and detecting a first response with respect to a first solution flowing through the channel and detecting or inputting a second response as a baseline value with respect to a second solution flowing through the channel, said method capable of quantitatively or semi-quantitatively determining the elements to be detected, contained in the sample solution, on the basis of the difference Δ between the first response and the second response, wherein the second solution flowing through the channel contains a response suppressing substance which acts to suppress the response by the reagent solution.
